Europäisches Patentamt

European Patent Office

Office européen des brevets

(11) Publication number: **0 316 020 B1**

## EUROPEAN PATENT SPECIFICATION

(45) Date of publication of patent specification: **19.05.93**  (51) Int. Cl.⁵: **G06F 13/28**, G06F 13/12

(21) Application number: **88120811.0**

(22) Date of filing: **15.11.83**

(60) Publication number of the earlier application in accordance with Art.76 EPC: **0 109 308**

(54) **Block counter system to monitor data transfers.**

(30) Priority: **16.11.82 US 442159**

(43) Date of publication of application:
**17.05.89 Bulletin  89/20**

(45) Publication of the grant of the patent:
**19.05.93 Bulletin  93/20**

(84) Designated Contracting States:
**BE DE FR GB NL SE**

(56) References cited:
**EP−A− 0 059 823**
**US−A− 3 454 930**
**US−A− 4 357 681**

(73) Proprietor: **UNISYS CORPORATION**
**Township Line and Union Meeting Roads**
**P.O. Box 500**
**Blue Bell, PA 19424−0001(US)**

(72) Inventor: **Sheth, Jayesh V.**
**25652 Rimgate Drive**
**El Toro, CA 92630(US)**

(74) Representative: **Carmichael, David Andrew Halliday et al**
**G.F. REDFERN & CO. Marlborough Lodge, 14 Farncombe Road**
**Worthing, West Sussex BN11 2BT (GB)**

EP 0 316 020 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### FIELD OF THE INVENTION

This invention is related to systems where data transfers are effectuated between a peripheral terminal unit and a main host computer wherein an intermediate I/O subsystem is used to perform the housekeeping duties of the data transfer.

### BACKGROUND OF THE INVENTION

A continuing area of developing technology involves the transfer of data between a main host computer system and one or more peripheral terminal units. To this end, there has been developed I/O subsystems which are used to relieve the monitoring and housekeeping problems of the main host computer and to assume the burden of controlling a peripheral terminal unit and to monitor control of data transfer operations which occur between the peripheral terminal unit and the main host computer system.

A particular embodiment of such an I/O subsystem has been developed which uses peripheral controllers known as data link processors whereby initiating commands from the main host computer are forwarded to a peripheral-controller which manages the data transfer operations with one or more peripheral units. In these systems the main host computer also provides a "data link word" which identifies each task that has been initiated for the peripheral-controller. After the completion of a task, the peripheral-controller will notify the main host system with a result/descriptor word as to the completion, incompletion or problem involved in the particular task.

These types of peripheral-controllers have been described in a number of patents issued to the assignee of the present disclosure and these patents are included herein by reference as follows:

U.S. Patent 4,106,092 issued August 8, 1978, entitled "Interface System Providing Interfaces to Central Processing Unit and Modular Processor-Controllers for an Input-Output Subsystem", inventor D.A. Millers, II.

U.S. Patent 4,074,352 issued February 14, 1978, entitled "Modular Block Unit for Input-Output Subsystem", inventors D.J. Cook and D.A. Millers, II.

U.S. Patent 4,162,520 issued July 24, 1979, entitled "Intelligent Input-Output Interface Control Unit for Input-Output Subsystem", inventors D.J. Cook and D.A. Millers, II.

U.S. Patent 4,189,769 issued February 19, 1980, entitled "Input-Output Subsystem For Digital Data Processing System", inventors D.J. Cook and D.A. Millers, II.

U.S. Patent 4,280,193 issued July 21, 1981, entitled "Data Link Processor for Magnetic Tape Data Transfer System", inventors K.W. Baun and J.G. Saunders.

U.S. Patent 4,313,162 issued January 26, 1982, entitled "I/O Subsystem Using Data Link Processors", inventors K.W. Baun and D.A. Millers, II.

U.S. Patent 4,322,792 issued March 30, 1982, entitled "Common Front-End Control for a Peripheral Controller Connected to a Computer", inventor K.W. Baun.

The above patents provide a background understanding of the use of the type of peripheral-controllers known as "data link processors", DLP, used in a data transfer network between a main host computer and peripheral terminal unit.

In the above mentioned Baun patent, there was described a peripheral-controller which was built of modular components consisting of a common front end control circuit which was of a universal nature for all types of peripheral controllers and which was connected with a peripheral dependent board circuit. The peripheral dependent circuit was particularized to handle the idiosyncrasies of specific peripheral terminal units.

The present disclosure likewise uses a peripheral-controller (data link processor) which follows the general pattern of the above described system, in that the peripheral-controller uses a common control circuit or common front end which works in coordination with a peripheral dependent circuit which is particularly suited to handle a specific type of peripheral terminal unit, such as a Tape Control Unit (TCU) which connects to one or more magnetic tape units.

US-A-4 293 928 discloses a system using a peripheral-dependent circuit board for providing the specific functions required for data transfers between a peripheral terminal unit and a peripheral-controller including a common control circuit card. The peripheral-dependent circuit board provides logic means for executing micro code word operators received from the common control circuit card and provides means for selecting a source of data that is to be transmitted for temporary storage in a buffer memory. The peripheral-dependent board also provides address logic means for formulating addresses to be used for reading and writing of data out of and into the buffer memory.

US-A-4 220 997 discloses apparatus for transferring information between an information store and a data channel. A control magnitude is produced to drive the information store at a predetermined speed in dependence of the quantity of information to be recorded. The control magnitude is derived from the level of fullness of a cyclical operating buffer store provided in the data channel.

The invention relates to a network wherein data is transferred between a main host computer and a magnetic tape peripheral unit via a peripheral-controller, wherein said peripheral-controller is initiated by commands from said host computer to execute data transfer operations and said peripheral-controller includes a common control circuit unit for sequencing microcode instructions and a peripheral dependent circuit unit for managing said tape peripheral unit, wherein said peripheral-controller includes buffer memory means for temporarily storing blocks of data being transferred, said buffer memory means having channels of connection to said tape peripheral unit and said host computer, and wherein said peripheral dependent circuit unit includes status means for providing information relating to the amount of data residing in said buffer memory means.

The invention is characterised in that signal output means are connected to said status means and function to provide status signals to said common control circuit unit indicating the number of blocks of data residing in said buffer memory means, in that said status means includes: shift register means which shifts up to count the number of blocks of data received into said buffer memory means, in that, when said buffer memory is filled with blocks of data from said host computer, said shift register causes said signal output means to pass information data to said common control circuit unit which then disconnects said host computer from said buffer memory means, after which said common control circuit unit connects said peripheral tape unit to said buffer memory means.

A control logic for indicating the state of the buffer memory means is claimed in EP-A-0 109 308 from which the present Specification is divided.

Thus, there is disclosed a system for regulating data transfer operations between host and peripheral whereby a peripheral-controller senses blocks of data stored in its RAM buffer in order to choose routines for data transfer appropriate to the data condition of the RAM buffer. The peripheral-controller makes use of a block counter monitoring system which will inform the peripheral-controller and the main host system of the "numerical block status" of data in the RAM buffer memory means.

In particular, the present invention discloses a system whereby the common front end (common control) circuit uses routines providing microcode instructions to address registers which access locations in the RAM buffer memory for the insertion of data or the withdrawal of data. There are two address registers, one for addresses of data taken from/to the peripheral unit and one for addresses of data which are to be forwarded from/to the main host computer.

A block counter logic circuit receives input from the peripheral address register and the system address register. In addition, a flip-flop output to the block counter logic circuit indicates the direction of data flow as being a "Write" (host-to-peripheral) or a "Read" (peripheral-to-Host). The block counter logic circuit provides two output logic signals which control a block counter. This enables the block counter to be shifted up or shifted down so that the internal signal data indicates the number of blocks of data residing in the RAM buffer memory. Certain parameters may be set to trigger signal output conditions when the amount of data in the RAM buffer memory falls below a certain figure.

BRIEF DESCRIPTION OF THE DRAWINGS

FIG. 1 illustrates the block counter system of the present disclosure which is used to inform the data transfer system of the status of a buffer memory means.

FIG. 2 is a system diagram showing the host computer cooperating with a peripheral-controller in order to control data transfer to and from a peripheral unit.

FIG. 3 is a drawing showing an eight bit shift register which can be shifted up or down according to conditions which occur between certain logic signals and clock signals.

FIG. 4 is a diagram showing how the block counter logic unit of FIG. 1 is organized to operate during Read or Write operations and the effect of either shifting up or shifting down the shift register.

FIG. 5A is a schematic drawing illustrating the significance of each bit-position in the block counter.

FIG. 5B is a chart indicating various "shift" relationships of the block counter with regard to "Read" and "Write" operations.

A "Read" operation takes data from a peripheral magnetic tape unit and temporarily stores it in a RAM memory buffer for later transfer to the host system.

A "Write" operation takes data from the main host system for temporary storage in the RAM buffer memory for subsequent transfer to a selected magnetic tape unit via a TCU or Tape Control Unit.

DESCRIPTION OF PREFERRED EMBODIMENTS

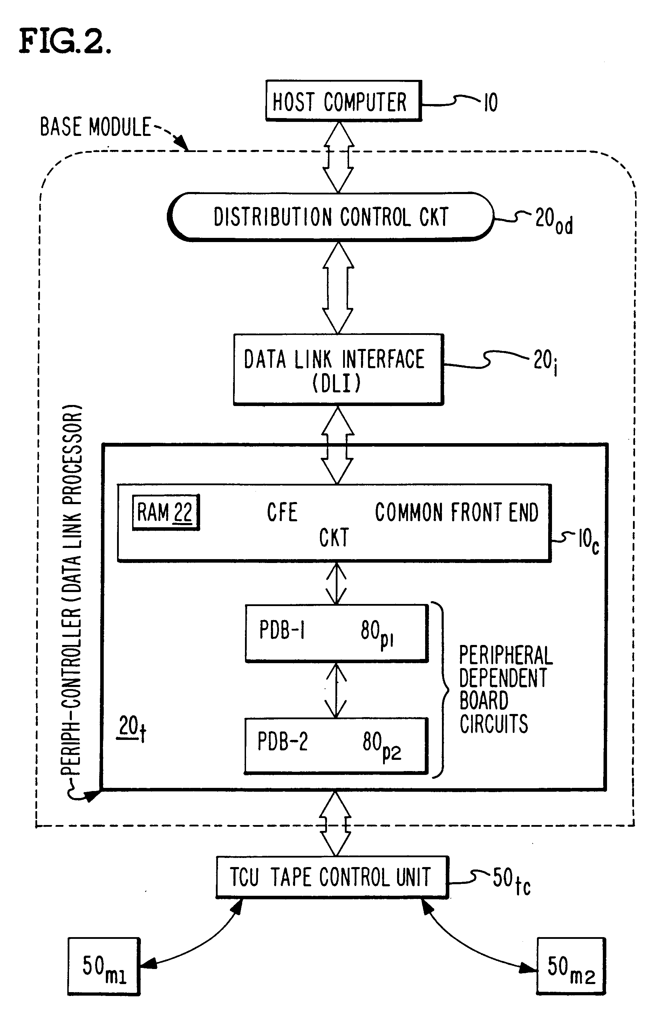

Referring to FIG. 2, the overall system diagram is shown whereby a host computer 10 is connected through an I/O subsystem to a peripheral unit, here for illustrative purposes shown as a tape control unit $50_{tc}$. As per previous descriptions in the above cited patents which were included by reference, the I/O subsystem may consist of a base module which supports one or more peripheral – controllers, in addition to other connection and distribution circuitry such as the distribution control circuit $20_{od}$ and the data link interface $20_i$. The peripheral – controller $20_t$ is shown in modular form as being composed of a common front end circuit $10_c$ and a peripheral dependent circuit shown, in this case, as being composed of two peripheral dependent boards designated $80_{p1}$ and $80_{p2}$.

In this network situation, it is often desired that data from the main host computer be transferred on to a peripheral unit, such as a magnetic tape unit, for recording on tape. This would be done by a peripheral tape control unit TCU such as $50_{tc}$. Likewise, at times it is desired that data from the magnetic tape unit be passed through the tape control unit to be read out by the host computer. Thus, data is transferred in a bidirectional sense, that is, in two directions at various times in the activities of the network.

The key monitoring and control unit is the data link processor $20_t$ which when initiated by specific commands of the host computer will arrange for the transfer of the desired data in the desired direction.

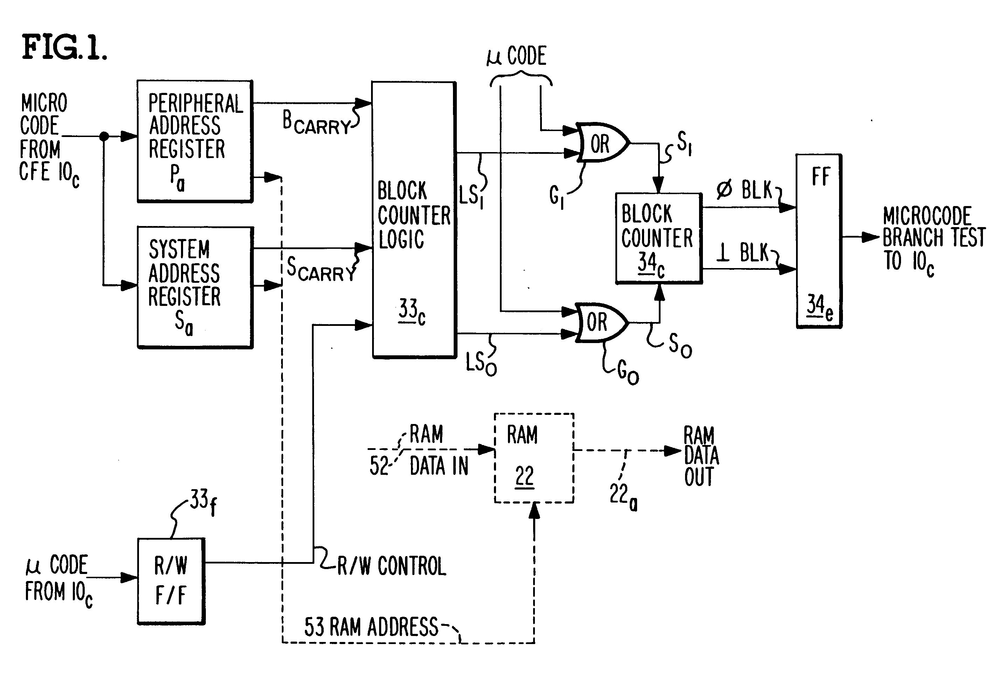

As seen in FIG. 1, the RAM buffer 22 is used for temporary storage of data being transferred between peripherals and the main host computer. In the preferred embodiment this RAM buffer has the capability of storing at least six "blocks" of data, each block of which consists of 256 words.

Again referring to FIG. 1, a block counter logic unit $33_c$ is used to receive input from two address registers designated as the peripheral address register, $P_a$, and the system address register, $S_a$. The peripheral address register, $P_a$, handles ad – dresses required when data is retrieved from the peripheral tape unit or when data is being sent to the peripheral tape unit. The system address reg – ister, $S_a$, is used when data is being received from the host system into the buffer 22 when data is being sent to the host system from the buffer 22. These two address registers in FIG. 1 are seen to receive their address data via microcode signals from the common front end circuit $10_c$ of FIG. 1.

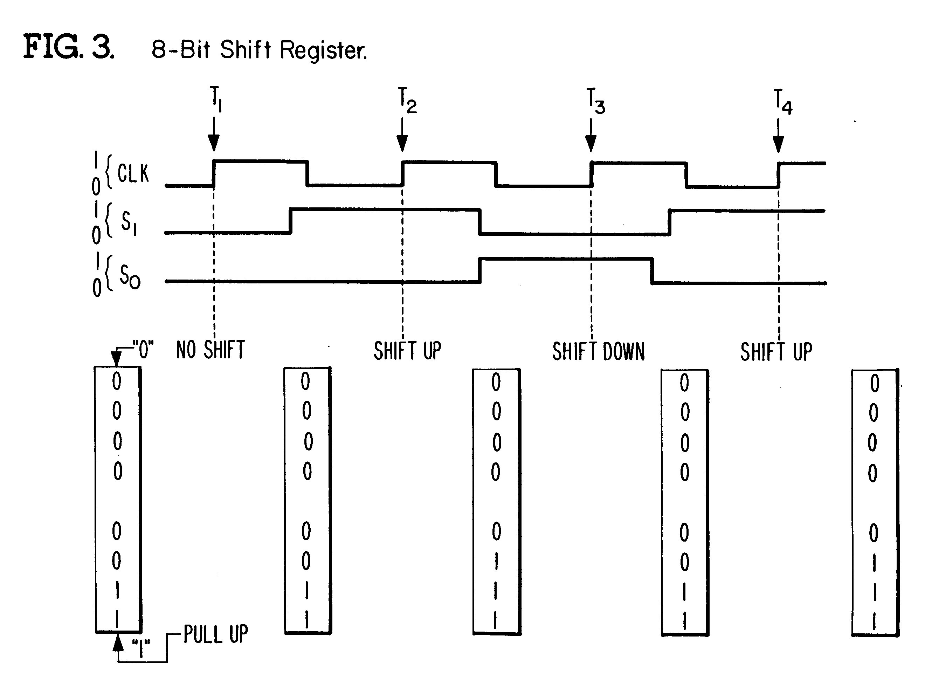

The address data outputs from $P_a$ and $S_a$ are fed to the RAM buffer 22 in order to address the desired location in the buffer memory. Further, the block counter logic unit $33_c$ receives one input designated "P Carry" from the peripheral address register and another input "S Carry" from the system address register, in addition to a Read/Write control signal from read – write flip – flop $33_f$. The flip – flop $33_f$ is controlled by micro – code signals from the peripheral – controller com – mon front end unit $10_c$. The block counter logic unit $33_c$ provides a first logic signal $LS_1$ and a second logic signal $LS_0$ which are fed to OR gates $G_1$ and $G_0$. These gates also have additional inputs from the microcode of the common front end card $10_c$ which inputs can be used to simulate the $LS_1$ and $LS_0$ signals for diagnostic or other control pur – poses. The OR gates provide two output signals designated $S_1$ and $S_0$ which are fed to the block counter $34_c$. As will be seen in FIG. 3, the output signals $S_1$ and $S_0$ are combined at certain times on occurrence of rising clock signals in order to pro – vide conditions which will make the block counter either "shift up" or "shift down" or "no shift".

Referring to FIG. 3, there is seen a schematic drawing which illustrates the use of the block counter $34_c$ of FIG. 1.

Referring to FIG. 3, there is seen, schemati – cally, an eight bit shift register which will be af – fected at selected points in time where the clock signal is in its "rising" state as illustrated by the arrows shown in FIG. 3. Referring to the leftmost schematic of the shift register, it will be seen that there are two "ones" which illustrate that the RAM buffer 22 has been loaded with two full blocks of data. At time $T_1$ it will be seen that conditions are such that "no shift" has occurred and the two "ones" remain in the shift register. At time $T_2$ there is a "shift up" and the shift register now has three bits with the "1" signal. At time $T_3$ there is a "shift down" signal and the shift register is back where two bit positions include a "1". At time $T_4$ there is a "shift up" and the shift register now has three bit positions manifesting the "1" signal, which in – dicates three full blocks of data residing in buffer 22 at that moment.

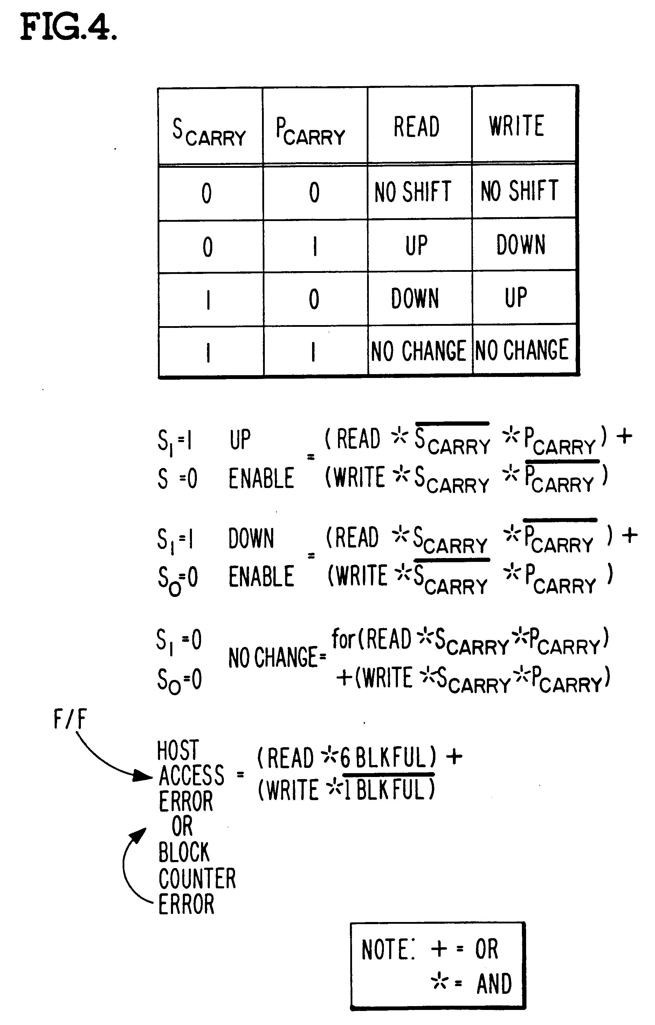

Referring to FIG. 4, there is seen a chart whereby the block counter logic unit $33_c$ is or – ganized to show overall operating conditions. Thus, as seen in the FIG. 4 chart, the conditions of the S Carry and P Carry during the "Read" condition show that there is a no shift or no change when S Carry and P Carry are the same, that is to say they are both 0 or they are both 1.

However, when S Carry is "0" and the P Carry is equal to "1", then there is an up shift, while if the S Carry is "1" and the P Carry is "0", there is a down shift during "Read" operations.

Referring to FIG. 4, it is seen that during "Write" operations, again when the S Carry and the P Carry are equal (both "0" or both "1") to each other, then there is no change or shift in the shift register. However, when the S Carry equals "0" and the P Carry equals "1" there is a down shift in this situation, and when the S Carry is equal to "1" and the P Carry is equal to "0" there is an up shift.

The block counter $34_c$ will reflect the situation that when data is being taken out of the magnetic tape unit in order to be fed to RAM buffer 22 ("Read" operation), the block counter will shift up unless at the same time there is data being removed from buffer 22 for transfer to the main host computer system in which case the block counter will shift down. Thus, the condition of the block counter's numerical status will indicate the "balance" between what data has gone out of and what data has come into the buffer 22.

Referring to FIG. 4, if there is a "Write" operation, this determines that data is to be written into the magnetic tape unit. Then, as data is removed from the RAM buffer over to the magnetic tape unit, the block counter will shift down but if more data is transferred from the main host computer into the RAM buffer 22, the block counter will be shifted up. Thus, again the placement of "ones" in various bit positions provides a running balance of the data blocks taken out as against the data blocks taken in at any given period.

Referring to FIG. 4 there are certain logic equations which indicate the logic used in the block counter logic unit $33_c$.

In the following logic equations it should be indicated that the asterisk refers to AND logic operation while the plus sign refers to OR logic operation.

(a) If signal counter $S_1$ equals "1" and signal $S_0$ equals "0", there occurs what may be called a condition of "Up enable" which is equal to (Read * $\overline{S\ Carry}$ * P Carry) + (Write * S Carry * $\overline{P\ Carry}$).

(b) Under the conditions where the signal $S_1$ equals "0" and the signal $S_0$ equals "1", this could be considered as a "Down enable" which is equal to (Read * S Carry * $\overline{P\ Carry}$) + (Write * $\overline{S\ Carry}$ * P Carry).

(c) In the condition where the signal $S_1$ equals "0" and the signal $S_0$ equals "0", there is the condition called "no change". This is equal to (Read * S Carry * P Carry) + (Write * S Carry * P Carry).

(d) The condition known as the "host access error", $H_e$, causes the setting of a flip−flop $34_e$, FIG. 1. (This is also called a block counter error). Thus, the host access error signal or block counter error signal is a result of:

$$H_e = (Read * 6\ BLKFUL) + (Write * \overline{1\ BLKFUL}).$$

Thus, on a Read operation, a full RAM buffer (six blocks of data) will signal an error condition.

Likewise, on a Write operation, a single (one) remaining block of data will trigger an error condition.

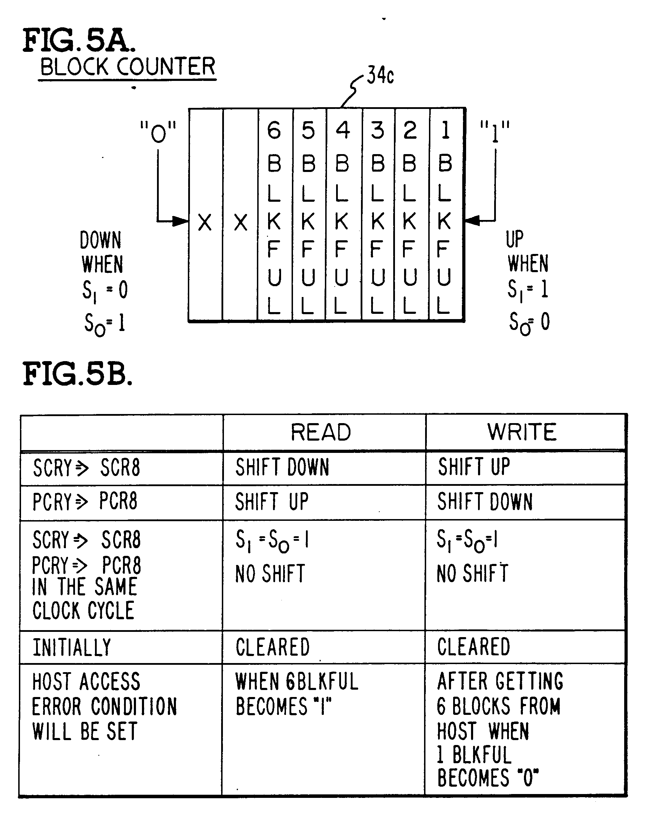

Referring to FIG. 5A, a schematic drawing of the block counter $34_c$ is shown to indicate that when a "1" resides in a series of bit positions, it is an indication of how many blocks of data reside in the RAM buffer 22 (FIG. 1).

For example, if a "1" resides in each of bit positions 1, 2, 3, 4, this indicates that "4 blocks" of data reside in RAM 22. Each "block" consists of 256 words (512 bytes of eight bits each).

In FIG. 5B the chart illustrates that during "Read" operations:

(a) As the P Carry increases (data being transferred from peripheral tape to buffer memory 22), the block counter $34_c$ will "shift up" indicating the buffer is being "loaded".

(b) As the S Carry increases (data from buffer memory being transferred to main host system), the block counter $34_c$ will "shift down" indicating the buffer memory is being "emptied".

In FIG. 5B the chart illustrates that during "Write" operations:

(c) As S Carry increases (data being loaded in buffer memory from main host system), the block counter $34_c$ will "shift up" to indicate the number of blocks of data in the buffer.

(d) As P Carry increases (data in buffer being unloaded for transfer to peripheral tape unit), the block counter $34_c$ will "shift down" and show how much data is left remaining in buffer 22.

In FIG. 5B, during "Read" operations, when a "1" appears in the 6th bit position of block counter $34_c$, then a flip−flop circuit $34_e$ (FIG. 1) is "set" and provides a signal to the common front end circuit $10_c$ which will inform the main system of an "access−error" condition. This signifies that the buffer memory 22 was "overfilled" in that the main host system did not accept data quickly enough.

During "Write" operations, when the buffer memory 22 has received six blocks of data from the host system, and the 1st bit position (1 BLKFUL) becomes "0", this indicates that the buffer memory has been completely unloaded (cleared) and then the flip−flop $34_e$ is set to signal the common front end circuit $10_c$ that more data is required from the host. This indicates the host did not supply data quickly enough to the RAM buffer 22.

There has been thus described a system by which it is possible to monitor blocks of data being transferred between peripheral units and a main host computer when there are simultaneous flows of data being put into or taken out of a RAM buffer means.

## Claims

1. A network wherein data is transferred between a main host computer (10) and a magnetic tape peripheral unit ($50_{tc}$) via a peripheral−controller ($20_t$), wherein said peripheral−con−

troller is initiated by commands from said host computer to execute data transfer operations and said peripheral‑controller includes a common control circuit unit (10c) for sequen‑cing microcode instructions and a peripheral dependent circuit unit ($80_{p1}$ & $80_{p2}$) for man‑aging said tape peripheral unit, wherein said peripheral‑controller includes buffer memory means (22) for temporarily storing blocks of data being transferred, said buffer memory means having channels of connection to said tape peripheral unit and said host computer, and wherein said peripheral dependent circuit unit includes status means ($34_c$) for providing information relating to the amount of data re‑siding in said buffer memory means; charac‑terised in that signal output means ($34_e$) are connected to said status means and function to provide status signals to said common control circuit unit indicating the number of blocks of data residing in said buffer memory means, in that said status means includes: shift register means (Fig.3) which shifts up to count the number of blocks of data received into said buffer memory means, in that, when said buffer memory is filled with blocks of data from said host computer, said shift register causes said signal output means to pass information data to said common control circuit unit which then disconnects said host computer from said buffer memory means, after which said com‑mon control circuit unit connects said periph‑eral tape unit to said buffer memory means.

2.  A network according to Claim 1, wherein, upon connection of said peripheral tape unit to said buffer memory means, said common control circuit unit causes execution of data transfer from said buffer memory means to said pe‑ripheral tape unit.

3.  A network according to Claim 2, wherein said shift register shifts down each time a block of data is removed from said buffer memory means to said peripheral tape unit.

4.  A network according to Claim 3, wherein, when said shift register is reduced by one block count, said signal output means will pass in‑formation to said common control circuit causing it to reconnect to said main host computer for enablement of more data transfer to said buffer memory means.

5.  A network according to any of the preceding claims, wherein said host system initiates a Write operation command to said peripheral‑controller to transfer data from main host computer, and said common control circuit unit initiates routines to transfer data from said host computer to said buffer memory means.

6.  A network according to any of the preceding claims, wherein said host system initiates a Read operation command to said peripheral‑controller to transfer data from said peripheral tape unit to said buffer memory means.

**Patentansprüche**

1.  Netzwerk zur Übertragung von Daten zwischen einem Haupt‑Hostcomputer (10) und einer peripheren Magnetbandeinheit ($50_{tc}$) über eine periphere Steuereinheit ($20_t$), wobei die peri‑phere Steuereinheit durch Befehle von dem Hostcomputer aktiviert wird, um Datentransfer‑Operationen auszuführen und die periphere Steuereinheit eine gemeinsame Steuerschaltungseinheit (10c) zur Sequenzie‑rung von Mikrocode‑Befehlen und eine peri‑phere abhängige Schaltungseinheit ($80_{p1}$ und $80_{p2}$) zur Organisation der peripheren Band‑einheit umfaßt, wobei die periphere Steue‑reinheit eine Puffer‑Speichereinrichtung (22) zur zeitweisen Speicherung von übertragenden Datenblöcken aufweist und die Puffer‑Spei‑chereinrichtung Verbindungskanäle zu der peripheren Bandeinheit und dem Hostcompu‑ter umfaßt und wobei die periphere abhängige Schaltungseinheit Statuseinrichtungen ($34_c$) zur Erzeugung von Informationen in Bezug auf die Anzahl der in der Puffer‑Speichereinrichtung vorhandenen Daten aufweist,
dadurch gekennzeichnet, daß Signal‑Ausga‑beeinrichtungen ($34_e$) mit den Statuseinrich‑tungen verbunden sind und zur Führung von Statussignalen zu der gemeinsamen Steuer‑schaltungseinheit dienen, die die Anzahl von in der Puffer‑Speichereinrichtung vorhandenen Datenblöcke anzeigen,
die Statuseinrichtungen ein Schieberegister (Figur 3) aufweisen, welches zur Zählung der Anzahl von in der Puffer‑Speichereinrichtung empfangenen Datenblöcken nach oben ver‑schoben wird, und
das Schieberegister in dem Fall, in dem der Pufferspeicher mit Datenblöcken von dem Hostcomputer gefüllt ist, bewirkt, daß die Signal‑Ausgabeeinrichtungen Informations‑daten zu der gemeinsamen Steuerschaltungs‑einheit führen, die dann den Hostcomputer von der Puffer‑Speichereinrichtung trennen und dann die periphere Bandeinheit mit dem Puf‑ferspeicher verbinden.

**2.** Netzwerk nach Anspruch 1, dadurch gekennzeichnet, daß beim Verbinden der peripheren Bandeinheit mit der Puffer – Speichereinrichtung die gemeinsame Steuer – schaltungseinheit eine Ausführung des Daten – transfers von der Puffer – Speichereinrichtung zu der peripheren Bandeinheit bewirkt.

**3.** Netzwerk nach Anspruch 2, dadurch gekennzeichnet, daß das Schiebere – gister seinen Inhalt jedesmal dann nach unten verschiebt, wenn ein Datenblock von dem Pufferspeicher entnommen und zu der peri – pheren Bandeinheit geführt wird.

**4.** Netzwerk nach Anspruch 3, dadurch gekennzeichnet, daß die Signal – Ausgabeeinrichtung bei Reduzierung des Schieberegisters um eine Blockzählung Infor – mationen zu der gemeinsamen Steuerschal – tung führt, durch die diese den Haupt – Host – computer zur Aktivierung weiterer Datenüber – tragungen erneut mit dem Pufferspeicher ver – bindet.

**5.** Netzwerk nach mindestens einem der vorher – gehenden Ansprüche, dadurch gekennzeichnet, daß das Hostsystem einen Befehl für Schreibetrieb zu der periphe – ren Steuereinheit führt, um Daten von dem Haupt – Hostcomputer zu übertragen und daß die gemeinsame Steuerschaltungseinheit Routinen zur Datenübertragung von dem Hostcomputer zu dem Pufferspeicher einleitet.

**6.** Netzwerk nach mindestens einem der vorher – gehenden Ansprüche, dadurch gekennzeichnet, daß das Hostsystem einen Befehl für Leseoperationen zu der peri – pheren Steuereinheit führt, um Daten von der peripheren Bandeinheit zu dem Pufferspeicher zu übertragen.

**Revendications**

**1.** Réseau dans lequel les données sont transfé – rées entre un ordinateur central hôte (10) et une unité périphérique de bandes magnétiques $(50_{tc})$ via une unité de commande de péri – phériques $(20_t)$, dans lequel ladite unité de commande de périphériques est initialisé par des instructions en provenance dudit ordina – teur hôte pour exécuter des opérations de transfert de données et ladite unité de com – mande de périphériques comprend un circuit de commande commun (10c) pour séquencer des instructions micro – codées et une unité circuit périphérique dépendant $(80_{p1}$ & $80_{p2})$

pour diriger ladite unité périphérique de ban – des, dans laquelle ladite unité de commande de périphériques comprend des moyens de mémoire tampon (22) pour le stockage tem – poraire de blocs de données à transférer, les – dits moyens de mémoire tampon ayant des canaux de connexion à ladite unité périphéri – que de bandes et ledit ordinateur hôte, et dans lequel ladite unité circuit périphérique dépen – dant comprend des moyens d'états $(34_c)$ pour fournir des informations relatives à la quantité de données résidant dans lesdits moyens de mémoire tampon ; caractérisé en ce que des moyens de signal de sortie (34e) sont connectés auxdits moyens d'états et fonction – nent pour fournir des signaux d'états audit circuit de commande commun en indiquant le nombre de blocs de données résidant dans lesdits moyens de mémoire tampon, en ce que lesdits moyens d'états comprennent : des moyens de registres à décalage (figure 3) qui décalent vers le haut pour compter le nombre de blocs de données reçus dans lesdits moyens de mémoire tampon, en ce que, quand ladite mémoire tampon est remplie avec des blocs de données dudit ordinateur hôte, ledit registre à décalage oblige lesdits moyens de signal de sortie à passer les données d'in – formation audit circuit de commande commun qui déconnecte alors ledit ordinateur hôte desdits moyens de mémoire tampon, après que ledit circuit de commande commun a connecté ladite unité périphérique de bandes auxdits moyens de mémoire tampon.

**2.** Réseau selon la revendication 1, dans lequel, lors de la connexion de ladite unité périphéri – que de bandes auxdits moyens de mémoire tampon, ledit circuit de commande commun provoque l'exécution du transfert de données desdits moyens de mémoire tampon vers la – dite unité périphérique de bandes.

**3.** Réseau selon la revendication 2, dans lequel ledit registre à décalage décale vers le bas chaque fois qu'un bloc de données est retiré desdits moyens de mémoire tampon vers la – dite unité périphérique de bandes.

**4.** Réseau selon la revendication 3, dans lequel, lorsque ledit registre à décalage est réduit du comptage d'un bloc, lesdits moyens de sortie de signal feront passer l'information audit cir – cuit de commande commun en faisant qu'il se reconnecte audit ordinateur central hôte pour validation du transfert de davantage de don – nées vers lesdits moyens de mémoire tampon.

5. Réseau selon l'une quelconque des revendications précédentes, dans lequel ledit système hôte initialise une instruction d'opération d'Ecriture vers ladite unité de commande de périphériques pour transférer des données à partir de l'ordinateur principal hôte, et ledit circuit de commande commun initialise des sous-programmes pour transférer les données dudit ordinateur principal hôte vers lesdits moyens de mémoire tampon.

6. Réseau selon l'une quelconque des revendications précédentes, dans lequel ledit système hôte initialise une instruction d'opération de Lecture vers ladite unité de commande de périphériques pour transférer des données de ladite unité périphérique de bande vers lesdits moyens de mémoire tampon.

FIG.1.

MICRO CODE FROM CFE $IO_c$

PERIPHERAL ADDRESS REGISTER $P_a$

SYSTEM ADDRESS REGISTER $S_a$

$B_{CARRY}$

$S_{CARRY}$

BLOCK COUNTER LOGIC $\underline{33}_c$

$\mu$ CODE

$LS_I$

$LS_O$

OR

$G_I$

OR

$G_O$

$S_I$

$S_O$

BLOCK COUNTER $\underline{34}_c$

$\emptyset$ BLK

$\perp$ BLK

FF $\underline{34}_e$

MICROCODE BRANCH TEST TO $IO_c$

RAM DATA IN
52

RAM $\underline{22}$

RAM DATA OUT
$22_a$

$33_f$

$\mu$ CODE FROM $IO_c$

R/W F/F

R/W CONTROL

53 RAM ADDRESS

EP 0 316 020 B1

# FIG.2.

HOST COMPUTER — 10

BASE MODULE

DISTRIBUTION CONTROL CKT — $20_{od}$

DATA LINK INTERFACE (DLI) — $20_i$

PERIPH-CONTROLLER (DATA LINK PROCESSOR)

RAM 22    CFE    COMMON FRONT END
CKT — $10_c$

$20_t$

PDB-1    $80_{p1}$

PDB-2    $80_{p2}$

PERIPHERAL DEPENDENT BOARD CIRCUITS

TCU TAPE CONTROL UNIT — $50_{tc}$

$50_{m1}$

$50_{m2}$

# FIG. 3.   8-Bit Shift Register.

# FIG.4.

| $S_{CARRY}$ | $P_{CARRY}$ | READ | WRITE |
|---|---|---|---|
| 0 | 0 | NO SHIFT | NO SHIFT |
| 0 | 1 | UP | DOWN |
| 1 | 0 | DOWN | UP |
| 1 | 1 | NO CHANGE | NO CHANGE |

$$\begin{matrix} S_I = 1 & UP \\ S = 0 & ENABLE \end{matrix} = \begin{matrix} (READ * \overline{S_{CARRY}} * P_{CARRY}) + \\ (WRITE * S_{CARRY} * \overline{P_{CARRY}}) \end{matrix}$$

$$\begin{matrix} S_I = 1 & DOWN \\ S_O = 0 & ENABLE \end{matrix} = \begin{matrix} (READ * S_{CARRY} * \overline{P_{CARRY}}) + \\ (WRITE * \overline{S_{CARRY}} * P_{CARRY}) \end{matrix}$$

$$\begin{matrix} S_I = 0 \\ S_O = 0 \end{matrix} \quad NO\ CHANGE = \begin{matrix} for (READ * S_{CARRY} * P_{CARRY}) \\ + (WRITE * S_{CARRY} * P_{CARRY}) \end{matrix}$$

F/F

$$\begin{matrix} HOST \\ ACCESS \\ ERROR \\ OR \\ BLOCK \\ COUNTER \\ ERROR \end{matrix} = \begin{matrix} (READ * 6\ BLKFUL) + \\ (WRITE * \overline{1\ BLKFUL}) \end{matrix}$$

NOTE: + = OR
      * = AND

12

# FIG.5A.

## BLOCK COUNTER

34c

"O" | X | X | 6 BLKFULL | 5 BLKFULL | 4 BLKFULL | 3 BLKFULL | 2 BLKFULL | 1 BLKFULL | "1"

DOWN WHEN $S_I = 0$ $S_O = 1$

UP WHEN $S_I = 1$ $S_O = 0$

# FIG.5B.

|  | READ | WRITE |
|---|---|---|
| SCRY ⇒ SCR8 | SHIFT DOWN | SHIFT UP |
| PCRY ⇒ PCR8 | SHIFT UP | SHIFT DOWN |
| SCRY ⇒ SCR8 PCRY ⇒ PCR8 IN THE SAME CLOCK CYCLE | $S_I = S_O = 1$ NO SHIFT | $S_I = S_O = 1$ NO SHIFT |
| INITIALLY | CLEARED | CLEARED |
| HOST ACCESS ERROR CONDITION WILL BE SET | WHEN 6BLKFUL BECOMES "1" | AFTER GETTING 6 BLOCKS FROM HOST WHEN 1 BLKFUL BECOMES "0" |